# EUROPEAN PATENT SPECIFICATION

(11) **EP 3 124 228 B1**
(45) Date of publication and mention of the grant of the patent: **26.12.2018**
(21) Application number: 15768508.2
(22) Date of filing: 26.03.2015
(51) Int. Cl.: C08J 7/04, C09D 183/04, C09D 5/16

(54) **ANTIFOULING SHEET**
FÄULNISVERHINDERNDE FOLIE
FEUILLE ANTISALISSURE

(30) Priority: 27.03.2014 JP 2014065911; 16.01.2015 JP 2015007008
(43) Date of publication of application: 01.02.2017
(73) Proprietor: LINTEC Corporation, Tokyo 173-0001 (JP); National Institute of Advanced Industrial Science and Technology, Tokyo 100-8921 (JP)
(72) Inventor: HIRONAGA, Maki, Tokyo 173-0001 (JP); ONO, Yoshitomo, Tokyo 173-0001 (JP); SUGINO, Takashi, Tokyo 173-0001 (JP); MIYATA, Sou, Tokyo 173-0001 (JP); ITO, Kazumi, Tokyo 173-0001 (JP); HOZUMI, Atsushi, Nagoya-shi Aichi 463-8560 (JP); URATA, Chihiro, Nagoya-shi Aichi 463-8560 (JP)
(74) Representative: Gille Hrabal
(86) International application number: PCT/JP2015/059447
(87) International publication number: WO 2015/147196

(56) References cited:
- EP-A1- 1 491 916
- WO-A1-03/081296
- JP-A- H07 290 639
- JP-A- 2008 237 957

## Description

### Technical Field

The present invention relates to an antifouling sheet.

### Background Art

In general, it is desirable that water droplets, stains and the like that may hinder vision do not adhere to the surfaces of windows for buildings, windows for automobiles, windshields for cars, airplanes, ships and the like, aquariums, ship bottom windows, undersea lives adhesion preventing films for ship bottoms, road panels such as soundproof walls and the like, mirrors installed in bathrooms and the like, and molded articles such as glass chambers, glass accessories and the like.

By coating the surfaces of such molded articles with a coating film formed of an antifouling substance, or by sticking an antifouling sheet thereto, the surfaces can be given water repellency and antifouling property.

It is known that, for imparting water repellency to molded articles, a layer that contains a fluorine-containing compound such as a fluororesin or the like is formed on the surfaces of molded articles.

For example, PTL 1 discloses a water-repellent film-coated article, in which glass or the like serving as a substrate therein is coated with a laminate having an underlayer formed of an inorganic compound and a water-repellent film formed of a fluorine-containing compound, which coats the surface of the underlayer.

### Citation List

### Patent Literature

PTL 1: JP 2010-285574A

### Summary of Invention

### Technical Problem

However, the water-repellent film-coated article described in PTL 1 has a water-repellent film formed of a fluorine-containing compound and is therefore unfavorable from the viewpoint of environmental protection.

In general, a water-repellent film formed of a fluorine-containing compound has a small slip acceleration for water droplets, and therefore, when water droplets have adhered to the surface of the water-repellent film, the film tends to take much time before the water droplets could slip off therefrom. Consequently, the water-repellent film-coated article described in PTL 1 is unsuitable to applications that are required to have a characteristic capable of instantaneously slipping off water droplets adhering thereto.

Alternatively, EP 1 491 916 A1 discloses composite hard coat layers with anti-staining property, lubricity, scratch resistance and abrasion resistance, wherein both the hard coat layer and the anti-staining layer are made of a cured product of silicon compounds.

Further, in an antifouling sheet having water repellency and antifouling property, the surface condition and the curability of the layer to impart water repellency and antifouling property are good, and the sheet is also required to have good interlayer adhesiveness.

An object of the present invention is to provide an antifouling sheet which is provided with an antifouling layer having good surface state and curability, which has a large slip acceleration for water droplets and therefore has excellent water repellency that makes water droplets slip off instantly, and which is excellent in interlayer adhesiveness.

### Solution to Problem

The present inventors have found that an antifouling sheet having an interlayer containing a (poly)silazane compound and having, on the surface of the interlayer, an antifouling layer formed of a composition containing two types of silane compounds each having a specific structure in a specific ratio can solve the above-mentioned problems, and have completed the present invention.

Specifically, the present invention provides the following [1] to [10].
[1] An antifouling sheet having an interlayer (X) containing a (poly)silazane compound and having an antifouling layer (Y) layered on the surface of the interlayer (X), wherein:
   the layer (Y) is formed of an antifouling layer-forming composition containing a silane compound (A) represented by the following formula (a) and a silane compound (B) represented by the following formula (b),
   the content of the component (B) in the antifouling layer-forming composition is 8 to 90 mol% relative to 100 mol% of the component (A):

      Formula (a): Si(OR¹)ₚ(X¹)₄₋ₚ

      wherein R¹ represents an alkyl group having 1 to 6 carbon atoms, X¹ represents a halogen atom, when the formula has plural R¹'s and X¹'s, the plural R¹'s and X¹'s each may be the same as or different from each other, p indicates an integer of 1 to 4,

      Formula (b): R²Si(OR³)_{q}(X²)_{3-q}

      wherein R² represents an unsubstituted or substituted alkyl group having 4 to 14 carbon atoms, R³ represents an alkyl group having 1 to 6 carbon atoms, X² represents a halogen atom, when the formula has plural R³'s and X²'s, the plural R³'s and X²'s each may be the same as or different from each other, q indicates an integer of 0 to 3.
[2] The antifouling sheet according to the above [1], wherein the component (A) in the antifouling layer-forming composition contains a silane compound of the formula (a) where p is 4.
[3] The antifouling sheet according to the above [1] or [2], wherein the component (B) in the antifouling layer-forming composition contains a silane compound of the formula (b) where q is 3.
[4] The antifouling sheet according to any one of the above [1] to [3], wherein the antifouling layer-forming composition further contains an acid catalyst (C).
[5] The antifouling sheet according to the above [4], wherein the component (C) in the antifouling layer-forming composition contains one or more selected from the group consisting of hydrochloric acid, phosphoric acid, acetic acid, formic acid, sulfuric acid, methanesulfonic acid, hydrobromic acid, p-toluenesulfonic acid and trifluoroacetic acid.
[6] The antifouling sheet according to the above [4] or (5), wherein the total content of the component (A), the component (B) and the component (C) in the antifouling layer-forming composition is 50 to 100% by mass relative to the total amount of the antifouling layer-forming composition.
[7] The antifouling sheet according to any one of the above [1] to [6], wherein the (poly)silazane compound contained in the interlayer (X) is a compound having a repeating unit represented by the following formula (1): 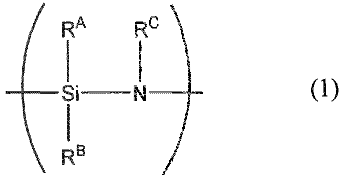 wherein R^{A}, R^{B} and R^{C} each independently represent a hydrogen atom, an alkyl group, a cycloalkyl group, an alkenyl group, an aryl group or an alkylsilyl group, and the alkyl group, the cycloalkyl group, the alkenyl group, the aryl group and the alkylsilyl group may further have a substituent.
[8] The antifouling sheet according to any one of the above [1] to [7], which has a configuration where the interlayer (X) is layered on a substrate and the antifouling layer (Y) is further layered on the surface of the interlayer (X).
[9] The antifouling sheet according to any one of the above [1] to [8], wherein the thickness of the interlayer (X) is 0.02 to 50 µm.
[10] The antifouling sheet according to any one of the above [1] to [9], wherein the antifouling layer (Y) is a layer formed by drying a coating film formed by applying the antifouling layer-forming composition onto the surface of the interlayer (X).

### Advantageous Effects of Invention

The antifouling sheet of the present invention is provided with an antifouling layer having good surface state and curability, has a large slip acceleration for water droplets, thereby having excellent water repellency that makes water droplets slip off instantly, and has excellent interlayer adhesiveness.

### Brief Description of Drawings

Fig. 1 illustrates cross-sectional views of antifouling sheets each having a substrate, showing examples of a configuration of an antifouling sheet of the present invention.
Fig. 2 illustrates cross-sectional views of antifouling sheets not having a substrate, showing examples of a configuration of an antifouling sheet of the present invention.

### Description of Embodiments

In this description, "number-average molecular weight (Mn)" is a standard polystyrene-equivalent value measured through gel permeation chromatography (GPC), specifically a value measured according to the method described in the section of Examples.

In this description, for example, "(poly)silazane compound" means both of "silazane compound" and "polysilazane compound", and the same shall apply to the other similarity terms.

### [Configuration of Antifouling Sheet]

The antifouling sheet of the present invention has an interlayer (X) and an antifouling layer (Y) layered on the surface of the interlayer (X). The configuration of the antifouling sheet of the present invention is not specifically limited so far as the sheet is so configured that the interlayer (X) and the antifouling layer (Y) are directly layered.

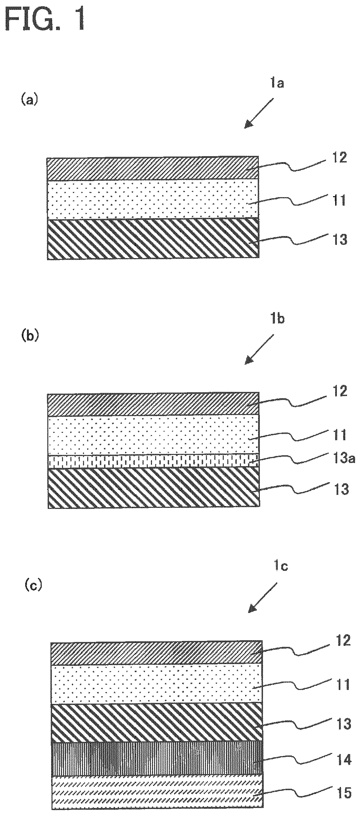

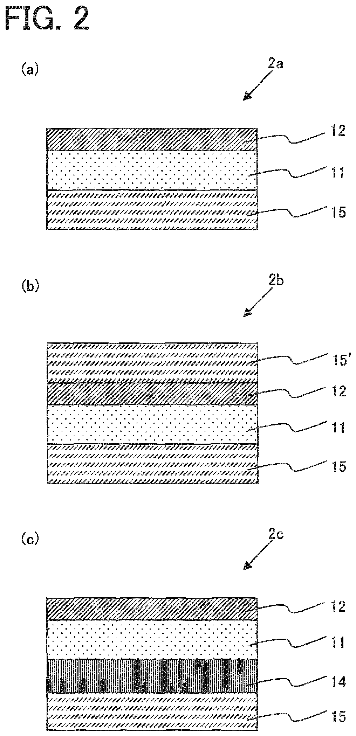

Fig. 1 and Fig. 2 each include cross-sectional views of an antifouling sheet, each showing an example of a configuration of an antifouling sheet of the present invention.

One example of a configuration of the antifouling sheet of the present invention is an antifouling sheet 1a in which an interlayer (X) 11 is layered on a substrate 13 and an antifouling layer (Y) 12 is layered on the surface of the interlayer (X) 11, as shown by Fig. 1(a).

From the viewpoint of protecting the surface of the antifouling layer (Y) in storing the antifouling sheet, a release material may be further provided on the exposed surface of the antifouling layer (Y) 12 of the antifouling sheet 1a.

For improving the adhesion between the substrate 13 and the interlayer (X) 11 of the antifouling sheet 1a, a primer layer-having substrate may be used to give an antifouling sheet 1b having a primer layer 13a between the substrate 13 and the interlayer (X) 11, as shown by Fig. 1(b).

Further, as shown by Fig. 1(c), the antifouling sheet of the present invention may also be an antifouling sheet 1c having an adhesive layer 14 and a release material 15 provided on the surface opposite to the surface layered with the interlayer (X) 11 of the substrate 13 of the antifouling sheet 1a. In addition, a release material may be provided also on the exposed surface of the antifouling layer (Y) 12 of the antifouling sheet 1c.

The antifouling sheet of the present invention may be one not having a substrate.

One example of a configuration of the antifouling sheet not having a substrate is, as shown by Fig. 2(a), an antifouling sheet 2a having an interlayer (X) 11 on a release material 15 and having an antifouling layer (Y) 12 layered on the surface of the interlayer (X) 11.

In the configuration of the antifouling sheet 2a shown by Fig. 2(a), the release material 15 is provided on the surface of the interlayer (X) 11, but the release material 15 may be layered on the surface of the antifouling layer (Y). In addition, as shown by Fig. 2(b), there may be provided an antifouling sheet 2b having an interlayer (X) 11 and an antifouling layer (Y) 12 sandwiched between two release materials 15 and 15'.

Further, as shown by Fig. 2(c), the sheet may also be an antifouling sheet 2c having an adhesive layer 14 provided between an interlayer (X) 11 and a release material 15. A release material may be provided also on the surface of the antifouling layer (Y) 12 of the antifouling sheet 2c shown by Fig. 2(c).

Ordinary antifouling sheets have a configuration where an antifouling layer is layered on a substrate, but in such antifouling sheets, the curability of the antifouling layer ends to be insufficient.

As opposed to these, the antifouling sheet of the present invention is so configured that the antifouling layer (Y) and the interlayer (X) containing a (poly)silazane compound are directly layered, and therefore can be an antifouling sheet in which the curability of the antifouling layer (Y) is bettered.

Regarding the reason, it may be presumed that the polymer formed through polymerization of the two silane compounds in the antifouling layer (Y) could readily bond to the (poly)silazane compound in the interlayer (X). Namely, it is considered that the polymer in the antifouling layer (Y) could bond to the (poly)silazane compound in the interlayer (X) to improve the interlayer adhesiveness between the antifouling layer (Y) and the interlayer (X) and improve the curability of the antifouling layer (Y).

The layers constituting the antifouling sheet of the present invention are described below.

### [Interlayer (X)]

The interlayer (X) that the antifouling sheet of the present invention has is a layer containing a (poly)silazane compound, and may contain any other additive within a range not detracting from the advantageous effects of the present invention.

The thickness of the interlayer (X) is preferably 0.02 to 500 µm, more preferably 0.05 to 100 µm, even more preferably 0.1 to 25 µm, further more preferably 0.3 to 15 µm.

When the thickness of the interlayer (X) is 0.02 µm or more, the curability of the antifouling layer (Y) to be formed on the interlayer (X) can be enhanced. In addition, the interlayer adhesiveness between the interlayer (X) and the antifouling layer (Y) can be bettered.

On the other hand, when the thickness of the interlayer (X) is 500 µm or less, the antifouling sheet could be a flexible antifouling sheet capable of preventing the interlayer from being cracked when the antifouling sheet is bent. In addition, visibility degradation owing to the refractive index difference from the antifouling layer (Y) can be prevented.

### <(Poly)silazane Compound>

The (poly)silazane compound is not specifically limited so far as it is a compound having a silicon-nitrogen bond, but is preferably a compound having a repeating unit represented by the following formula (1).

The compound may be a linear compound having a linear structure containing a repeating unit represented by the following general formula (1), or may be a cyclic compound having a cyclic structure containing a repeating unit represented by the following general formula (1). 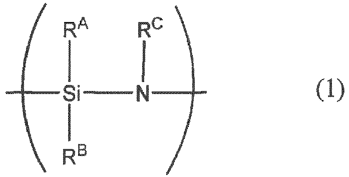 wherein R^{A}, R^{B} and R^{C} each independently represent a hydrogen atom, an alkyl group, a cycloalkyl group, an alkenyl group, an aryl group or an alkylsilyl group. The alkyl group, the cycloalkyl group, the alkenyl group, the aryl group and the alkylsilyl group may further have a substituent.

Examples of the alkyl group that may be selected for R^{A}, R^{B} and R^{C} include a methyl group, an ethyl group, an n-propyl group, an isopropyl group, an n-butyl group, an isobutyl group, a sec-butyl group, a t-butyl group, an n-pentyl group, an isopentyl group, a neopentyl group, an n-hexyl group, an n-heptyl group, an n-octyl group, a 2-ethylhexyl group, etc.

Among these alkyl groups, an alkyl group having 1 to 10 carbon atoms is preferred, an alkyl group having 1 to 6 carbon atoms is more preferred, and an alkyl group having 1 to 3 carbon atoms is even more preferred.

Examples of the cycloalkyl group that may be selected for R^{A}, R^{B} and R^{C} include a cyclopentyl group, a cyclohexyl group, a methylcyclohexyl group, etc.

Among these cycloalkyl groups, a cycloalkyl group having 3 to 12 ring carbon atoms is preferred, and a cycloalkyl group having 6 to 10 ring carbon atoms is more preferred.

Examples of the alkenyl group that may be selected for R^{A}, R^{B} and R^{C} include a vinyl group, a 1-propenyl group, a 2-propenyl group, a 1-butenyl group, a 2-butenyl group, a 3-butenyl group, etc.

Among these alkenyl groups, an alkenyl group having 2 to 10 carbon atoms is preferred, and an alkenyl group having 2 to 5 carbon atoms is more preferred.

Examples of the aryl group that may be selected for R^{A}, R^{B} and R^{C} include a phenyl group, a biphenyl group, a triphenyl group, a naphthyl group, an anthracenyl group, etc.

Among these aryl groups, an aryl group having 6 to 12 carbon atoms is preferred, and a phenyl group is more preferred.

Examples of the alkylsilyl group that may be selected for R^{A}, R^{B} and R^{C} include a trimethylsilyl group, a triethylsilyl group, a tri-n-propylsilyl group, a triisopropylsilyl group, a tri-t-butylsilyl group, a methyldiethylsilyl group, a dimethylsilyl group, a diethylsilyl group, a methylsilyl group, an ethylsilyl group, etc.

Among these alkylsilyl groups, an alkylsilyl group having 1 to 10 carbon atoms is preferred, an alkylsilyl group having 1 to 6 carbon atoms is more preferred, and an alkylsilyl group having 1 to 3 carbon atoms is even more preferred.

The alkyl group, the cycloalkyl group, the alkenyl group, the aryl group and the alkylsilyl group that may be selected for R^{A}, R^{B} and R^{C} may further have a substituent.

Examples of the substituent include a halogen atom selected from a fluorine atom, a chlorine atom, a bromine atom, an iodine atom; a hydroxyl group; a nitro group; an amino group; a cyano group; a thiol group; an epoxy group; a glycidoxy group; a (meth)acryloyloxy group; an alkyl group having 1 to 6 carbon atoms (preferably 1 to 3 carbon atoms); a cycloalkyl group having 3 to 12 ring carbon atoms (preferably 6 to 10 ring carbon atoms); an aryl group having 6 to 12 ring carbon atoms; a heteroaryl group having 6 to 12 ring carbon atoms; an alkoxy group having 1 to 6 carbon atoms (preferably 1 to 3 carbon atoms); an aryloxy group having 6 to 12 ring carbon atoms, etc. These substituents may be further substituted with any other substituent.

However, the alkyl group, the cycloalkyl group, the alkenyl group, the aryl group and the alkylsilyl group that may be selected for R^{A}, R^{B} and R^{C} are unsubstituted.

The compound having a repeating unit represented by the above-mentioned general formula (1) may be an inorganic (poly)silazane compound composed of silicon atoms, nitrogen atoms and hydrogen atoms, and may also be an organic (poly)silazane compound containing carbon atoms along with silicon atoms, nitrogen atoms and hydrogen atoms.

Examples of the inorganic (poly)silazane compound include the following compounds (i) to (iii).
(i) A compound having a repeating unit of the above-mentioned general formula (1) where R^{A}, R^{B} and R^{C} are all hydrogen atoms (for example, compounds described in JP 63-16325B).
(ii) A compound having a repeating unit represented by the following general formula (2). 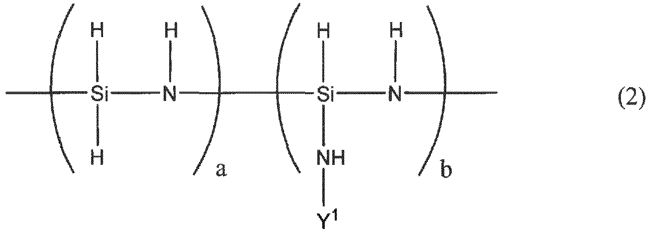 wherein a and b each independently indicate an integer of 1 or more; and Y¹ represents a hydrogen atom or a group represented by the following general formula (2a). 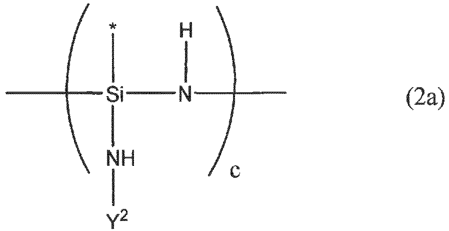 wherein c indicates an integer of 1 or more, * indicates a bonding position, and Y² represents a hydrogen atom or a group represented by the above formula (2a).
(iii) A compound having a structure represented by the following formula (3).

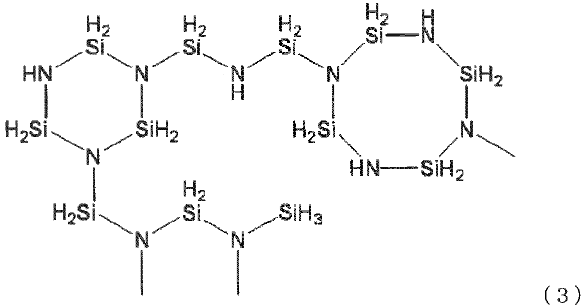

Examples of the organic (poly)silazane compound include the following compounds (iv) to (viii).
(iv) A compound having a cyclic structure with a repeating unit represented by the above general formula (1) where R^{A} is the above-mentioned group except a hydrogen atom, and R^{B} and R^{C} are hydrogen atoms (its polymerization degree is preferably 3 to 5).
(v) A compound having a cyclic structure with a repeating unit represented by the above general formula (1) where R^{A} and R^{C} each are the above-mentioned group except a hydrogen atom, and R^{B} is a hydrogen atom (its polymerization degree is preferably 3 to 5).
(vi) A compound having a cyclic structure with a repeating unit represented by the above general formula (1) where R^{A} and R^{B} each are the above-mentioned group except a hydrogen atom, and R^{C} is a hydrogen atom (its polymerization degree is preferably 3 to 5).
(vii) A compound having a structure represented by the following general formula (4). 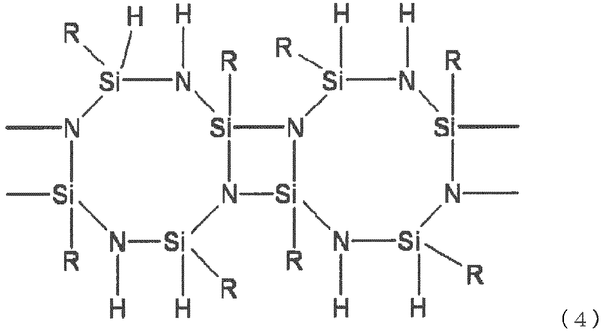 wherein R represents an alkyl group having 1 to 6 carbon atoms, and is preferably a methyl group.
(viii) A compound having a repeating unit represented by the following general formula (5). 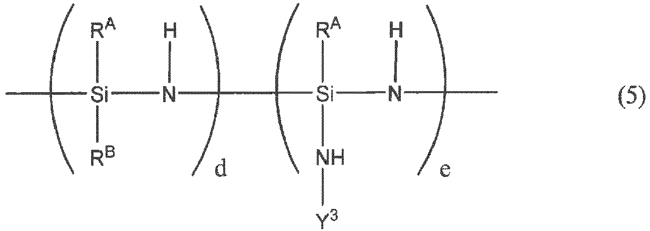 wherein R^{A} and R^{B} are the same as R^{A} and R^{B} in the above general formula (1), d and e each independently indicate an integer of 1 or more, Y³ represents a hydrogen atom or a group represented by the following general formula (5a). 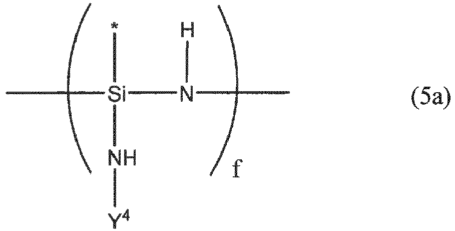 wherein f indicates an integer of 1 or more, * indicates a bonding position, Y⁴ represents a hydrogen atom or a group represented by the above general formula (5a).

Examples of other (poly)silazane compounds than the compounds having a repeating unit represented by the above general formula (1) include 1,1,1,3,3,3-hexamethyldisilazane, 1,3-bis(chloromethyl)tetramethyldisilazane, 1,3-bis(3,3,3-trifluoropropyl)-1,1,3,3-tetramethyldisilazane, 1,3-diphenyltetramethyldisilazane, 1,3-divinyl-1,1,3,3 -tetramethyldisilazane, 1,1,3,3-tetramethyldisilazane, etc.

The (poly)silazane compound for use in the present invention may also be a modified polysilazane derivative.

Among these (poly)silazane compounds, inorganic (poly)silazane compounds are preferred, and inorganic (poly)silazane compounds having a repeating unit of the above general formula (1) where R^{A} to R^{C} are all hydrogen atoms are more preferred.

As the (poly)silazane compound for use in the present invention, commercial products that are commercially available as glass coating materials may be used directly as they are.

One alone or two or more of (poly)silazane compounds may be used either singly or as combined.

The number-average molecular weight (Mn) of the (poly)silazane compound is preferably 100 to 50000, more preferably 300 to 10000, even more preferably 500 to 5000.

<Other Additives>

The interlayer (X) may contain any other additive within a range not detracting from the advantageous effects of the present invention, along with the above-mentioned (poly)silazane compound.

Examples of the other additives include a resin component not corresponding to (poly)silazane compounds, a curing agent, a polymerization initiator, a catalyst, an anti-aging agent, a light stabilizer, a flame retardant, an electroconductive agent, etc.

The resin component includes a polymer having a number-average molecular weight of 1000 or more not corresponding to the above-mentioned (poly)silazane compounds, and examples of the polymer include an acrylic resin, an urethane resin, a polyester resin, a silicone resin, a rubber resin, etc.

The resin component also includes a polymer that is formed through polymerization of a polymerizing compound by heating or energy irradiation.

The polymerizing compound includes (meth)acryloyl group-having compounds, concretely (meth)acrylate compounds having such a property that the polymerization thereof can be accelerated through energy ray irradiation with UV rays, electron rays, etc.

Examples of the (meth)acrylate compound include trimethylolpropane tri(meth)acrylate, tetramethylolmethane tetra(meth)acrylate, pentaerythritol tri(meth)acrylate, dipentaerythritol monohydroxy-penta(meth)acrylate, dipentaerythritol hexa(meth)acrylate, 1,4-butylene glycol di(meth)acrylate, 1,6-hexanediol di(meth)acrylate, polyethylene glycol di(meth)acrylate, etc.

The content of the (poly)silazane compound in the interlayer (X) is, from the viewpoint of improving the curability of the antifouling layer (Y) and from the viewpoint of improving the interlayer adhesiveness between the interlayer (X) and the antifouling layer (Y), preferably 5 to 100% by mass relative to the total amount (100% by mass) of the interlayer (X), more preferably 10 to 100% by mass, even more preferably 50 to 100% by mass.

In the case where a (poly)silazane compound is the main component in the interlayer (X), the content of the (poly)silazane compound in the interlayer (X) is, from the above-mentioned viewpoints, preferably 50 to 100% by mass relative to the total amount (100% by mass) of the interlayer (X), more preferably 65 to 100% by mass, even more preferably 80 to 100% by mass, further more preferably 90 to 100% by mass.

In turn, in the case where a resin component not corresponding to (poly)silazane compounds is the main component in the interlayer (X), the content of the (poly)silazane compound in the interlayer (X) is preferably 5 to 50% by mass, more preferably 5 to 45% by mass.

The content of a fluorine-containing compound in the interlayer (X) is, from the viewpoint of the environment, preferably less than 10% by mass relative to the total mass (100% by mass) of the interlayer (X), more preferably less than 5% by mass, even more preferably less than 1% by mass, further more preferably less than 0.01% by mass.

### [Antifouling Layer (Y)]

The antifouling layer (Y) that the antifouling sheet of the present invention has is a layer formed of an antifouling layer-forming composition that contains a silane compound (A) represented by the above formula (a) and a silane compound (B) represented by the above formula (b).

The antifouling layer-forming composition preferably contains an acid catalyst (C) along with the component (A) and the component (B) therein, and within a range not detracting from the advantageous effects of the present invention, the composition may contain any other additives than the components (A) to (C).

The antifouling layer (Y) of the antifouling sheet of the present invention is a layer formed of an antifouling layer-forming composition that contains the component (A) and the component (B) each having a specific structure, in a predetermined ratio, and therefore, the antifouling layer (Y) has excellent curability and can provide an antifouling sheet having a large slip acceleration for water droplets and therefore having excellent water repellency that makes water droplets slip off instantly.

Regarding the reason, the present inventors have considered that there would be some factors in the structure of the polymer formed through polycondensation of the component (A) and the component (B) in the process of forming the antifouling layer (Y) from the antifouling layer-forming composition.

Namely, the present inventors have considered that, in the structure of the polymer, the presence of the alkyl group in the unit derived from the component (B) (R² in the formula (b)) would contribute toward improving the water repellency of the formed antifouling layer, but when the unit derived from the component (B) becomes dense, the reactivity would lower and the curability of the antifouling layer would tend to lower.

Based on the consideration, the present inventors have tried introducing a unit derived from the component (A) that plays a role of a spacer, between the units derived from the component (B), thereby forming a polymer for the antifouling layer where the distance between the units derived from the component (B) is controlled, and accordingly, have considered that the mobility of the alkyl group in the unit derived from the component (B) could be thereby controlled and both the water repellency and the curability of the antifouling layer could be improved, and as a result, have completed the present invention.

Consequently, the antifouling layer (Y) that the antifouling sheet of the present invention has must be a layer formed of the antifouling layer-forming composition containing the component (A) and the component (B) in a predetermined ratio.

The thickness of the antifouling layer (Y) is, from the viewpoint of providing the antifouling sheet having excellent antifouling performance and excellent water repellency capable of securing a large slip acceleration for water droplets and capable of making water droplets slip off instantly, preferably 0.01 to 40 µm, more preferably 0.05 to 25 µm, even more preferably 0.10 to 15 µm, further more preferably 0.30 to 5 µm.

### <Component (A): Silane compound represented by formula (a)>

The antifouling layer-forming composition that is a forming material for the antifouling layer (Y) contains a silane compound represented by the following formula (a).

Formula (a): Si(OR¹)ₚ(X¹)₄-ₚ

wherein R¹ represents an alkyl group having 1 to 6 carbon atoms, X¹ represents a halogen atom, when the formula has plural R¹'s and X¹'s, the plural R¹'s and X¹'s each may be the same as or different from each other, p indicates an integer of 1 to 4.

Examples of the alkyl group that may be selected for R¹ include a methyl group, an ethyl group, an n-propyl group, an isopropyl group, an n-butyl group, an s-butyl group, an isobutyl group, a t-butyl group, an n-pentyl group, an n-hexyl group, a neopentyl group, a methylpentyl group, etc.

The alkyl group that may be selected for R¹ may be any of a linear or branched one, but is preferably a linear one.

The halogen atom that may be selected for X¹ includes a fluorine atom, a chlorine atom, a bromine atom and an iodine atom, but is preferably a chlorine atom.

One alone or two or more of the silane compounds represented by the above-mentioned formula (a) may be used either singly or as combined.

Preferably, the component (A) contains a silane compound of the formula (a) where p is 4.

### <Component (B): Silane compound represented by formula (b)>

The antifouling layer-forming composition that is a forming material for the antifouling layer (Y) contains a silane compound represented by the following formula (b), along with the silane compound of the component (A).

Formula (b): R²Si(OR³)_{q}(X²)₃-_{q}

wherein R² represents an unsubstituted or substituted alkyl group having 4 to 14 carbon atoms, R³ represents an alkyl group having 1 to 6 carbon atoms, X² represents a halogen atom, when the formula has plural R³'s and X²'s, the plural R³'s and X²'s each may be the same as or different from each other, q indicates an integer of 0 to 3.

The carbon number of the alkyl group that may be selected for R² is, from the viewpoint of improving the surface state and the curability of the antifouling layer (Y) to be formed, preferably 4 to 14, more preferably 5 to 13, even more preferably 6 to 12, further more preferably 6 to 10.

The above carbon number does not include the carbon number of the substituent that the alkyl group capable of being selected for R² may have.

When the carbon number of the alkyl group that may be selected for R² is less than 4, cissing may occur when the resultant antifouling layer-forming composition is applied onto the surface of the interlayer (X), and therefore the surface state of the antifouling layer (Y) formed of the composition is poor.

In turn, when the carbon number of the alkyl group that may be selected for R² is more than 14, the curability of the antifouling layer (Y) to be formed of the resultant antifouling layer-forming composition is poor. With the increase in the carbon number of the alkyl group, the resultant antifouling layer-forming composition comes to gel more readily and the surface state of the antifouling layer (Y) formed of the composition tends to worsen.

Examples of the alkyl group that may be selected for R² include an n-butyl group, an s-butyl group, an isobutyl group, a t-butyl group, an n-pentyl group, an n-hexyl group, an n-heptyl group, an n-octyl group, an n-nonyl group, an n-decyl group, an n-undecyl group, an n-dodecyl group, an n-tridecyl group, an n-tetradecyl group, a methylpentyl group, a pentylhexyl group, a butylpentyl group, a 2-ethylhexyl group, etc.

The alkyl group that may be selected for R² may be any of a linear alkyl group or a branched alkyl group, but is, from the viewpoint of forming the antifouling layer (Y) having good surface state and curability, preferably a linear alkyl group.

The alkyl group that may be selected for R² may further have a substituent.

Examples of the substituent include a halogen atom selected from a fluorine atom, a chlorine atom, a bromine atom and an iodine atom; a hydroxyl group; a nitro group; an amino group; a cycloalkyl group having 3 to 10 ring carbon atoms; an aryl group having 6 to 12 ring carbon atoms; etc. These substituents may further be substituted with any other substituent.

However, the alkyl group that may be selected for R² is preferably unsubstituted.

The alkyl group that may be selected for R³ includes those mentioned for the alkyl group that may be selected for R¹ in the above-mentioned formula (a).

The halogen atom that may be selected for X² includes those mentioned for the halogen atom that may be selected for X¹ in the above-mentioned formula (a).

One alone or two or more of the silane compounds represented by the above-mentioned formula (b) may be used either singly or as combined.

Preferably, the component (B) contains a silane compound of the formula (b) where q is 3.

In the present invention, the content of the component (B) in the antifouling layer-forming composition is 8 to 90 mol% relative to 100 mol% of the component (A).

When the content of the component (B) is less than 8 mol%, the formed antifouling layer (Y) has a small slip acceleration for water droplets and takes much time for slipping water droplets, and is therefore poor in water repellency. In addition, when the resultant antifouling layer-forming composition is applied to the surface of the interlayer (X), cissing may readily occur and the antifouling layer (Y) to be formed of the composition tends to have a poor surface state.

In turn, when the content of the component (B) is more than 90 mol%, the curability of the antifouling layer (Y) to be formed of the resultant antifouling layer-forming composition is poor.

From the viewpoint of forming the antifouling layer (Y) having an increased slip acceleration for water droplets to exhibit excellent water repellency capable of making water droplets slip off instantly, and from the viewpoint of bettering the surface state of the antifouling layer (Y) to be formed, the content of the component (B) relative to 100 mol% of the component (A) in the antifouling layer-forming composition is preferably 10 mol% or more, more preferably 12 mol% or more, even more preferably 16 mol% or more, further more preferably 20 mol% or more, still more preferably 25 mol% or more, further still more preferably 30 mol% or more.

In turn, from the viewpoint of improving the curability of the antifouling layer (Y) to be formed, the content of the component (B) relative to 100 mol% of the component (A) in the antifouling layer-forming composition is preferably 80 mol% or less, more preferably 70 mol% or less, even more preferably 60 mol% or less, further more preferably 55 mol% or less, still further more preferably 50 mol% or less, still further more preferably 45 mol% or less.

### <Component (C): Acid Catalyst>

From the viewpoint of improving the curability of the antifouling layer (Y) to be formed, the antifouling layer-forming composition that is a forming material for the antifouling layer (Y) preferably contains an acid catalyst (C).

The acid component (C), when contained in the antifouling layer-forming composition, can accelerate hydrolysis of the reactive functional groups that the component (A) and the component (B) have, and therefore can accelerate polycondensation between the component (A) and the component (B) to form the antifouling layer (Y) having excellent curability.

The acid catalyst (C) is not specifically limited so far as it is a component having an effect capable of accelerating the hydrolysis of the reactive functional groups that the component (A) and the component (B) have, but from the viewpoint of forming the antifouling layer (Y) having excellent curability, preferably contains one or more selected from the group consisting of hydrochloric acid, phosphoric acid, acetic acid, formic acid, sulfuric acid, methanesulfonic acid, hydrobromic acid, p-toluenesulfonic acid and trifluoroacetic acid, and more preferably contains hydrochloric acid.

The content of the component (C) in the antifouling layer-forming composition is, from the viewpoint of improving the curability of the antifouling layer (Y) to be formed, preferably 0.001 to 1.000 mol%, more preferably 0.005 to 0.500 mol%, even more preferably 0.010 to 0.100 mol%, still more preferably 0.020 to 0.070 mol%.

### <Other Additives>

The antifouling layer-forming composition may contain any other additives in addition to the above-mentioned components (A) to (C), within a range not detracting from the advantageous effects of the present invention.

Examples of the other additives include a resin component, a curing agent, an anti-aging agent, a light stabilizer, a flame retardant, an electroconductive agent, an antistatic agent, a plasticizer, etc.

The total content of the component (A), the component (B) and the component (C) in the antifouling layer-forming composition is preferably 50 to 100% by mass relative to the total amount (100% by mass) of the antifouling layer-forming composition, more preferably 65 to 100% by mass, even more preferably 80 to 100% by mass, further more preferably 90 to 100% by mass.

The content of the fluorine-containing compound in the antifouling layer-forming composition is, from the viewpoint of the environment, preferably less than 10% by mass relative to the total amount (100% by mass) of the antifouling layer-forming composition, more preferably less than 5% by mass, even more preferably less than 1% by mass, still more preferably less than 0.01% by mass.

Preferably, the antifouling layer (Y) is a layer formed by drying a coating film formed by applying the above-mentioned antifouling layer-forming composition onto the surface of the interlayer (X).

After a coating film is formed on the surface of the interlayer (X), using the antifouling layer-forming composition, and then the coating film is dried to form the antifouling layer (Y). Accordingly, along with the advancement of the polycondensation of the component (A) and the component (B) in the antifouling layer-forming composition, the reaction of the polymer formed through the polycondensation and the (poly)silazane compound in the interlayer (X) may go on. As a result, in the antifouling sheet to be provided here, the interlayer adhesiveness between the antifouling layer (Y) and the interlayer (X) can be improved and the curability of the antifouling layer (Y) to be formed can be further improved.

### [Substrate]

Examples of the substrate for use in the present invention include a paper substrate, a resin film or sheet, a substrate prepared by laminating a paper substrate with a resin, etc., and can be suitably selected in accordance with the use of the antifouling sheet.

Examples of paper to constitute a paper substrate include thin paper, medium-quality paper, wood-free paper, impregnated paper, coated paper, art paper, parchment paper, glassine paper, etc.

Examples of the resin to constitute a resin film or sheet include polyolefin resins such as polyethylene, polypropylene, etc.; vinylic resins such as polyvinyl chloride, polyvinylidene chloride, polyvinyl alcohol, ethylene-vinyl acetate copolymer, ethylene-vinyl alcohol copolymer, etc.; polyester resins such as polyethylene terephthalate, polybutylene terephthalate, polyethylene naphthalate, etc.; polystyrene; acrylonitrile-butadiene-styrene copolymer; cellulose triacetate; polycarbonate; urethane resins such as polyurethane, acryl-modified polyurethane, etc.

The substrate prepared by laminating a paper substrate with a resin includes laminate paper prepared by laminating the above-mentioned paper substrate with a thermoplastic resin such as polyethylene, etc.

Among these substrates, a resin film or sheet is preferred, a film or sheet formed of a polyester resin is more preferred, and a film or sheet formed of polyethylene terephthalate (PET) is even more preferred.

As the substrate for use in the present invention, from the viewpoint of improving the adhesiveness thereof to the interlayer (X), a primer layer-having substrate prepared by providing a primer layer on the surface of a substrate selected from the above-mentioned paper substrate, resin film or sheet, and laminated substrate prepared by laminating a paper substrate with a resin is preferred.

Examples of the component to constitute the primer layer include a polyester resin, a urethane resin, a polyester urethane resin, an acrylic resin, etc. One alone or two or more of these components may be used either singly or as combined.

The thickness of the substrate is suitably defined depending on the use of the antifouling sheet, and is, from the viewpoint of handleability and economic efficiency, preferably 10 to 250 µm, more preferably 15 to 200 µm, even more preferably 20 to 150 µm.

In the case where a primer layer-having substrate is used, the above range is a range of the total thickness of the primer layer-having substrate including the thickness of the primer layer.

The substrate may further contain a UV absorbent, a light stabilizer, an antioxidant, an antistatic agent, a slip agent, an antiblocking agent, a colorant, etc.

### [Release Material]

The release material for use in the present invention includes a release sheet prepared through double-side release treatment, a release sheet prepared by single-side release treatment, etc., and one prepared by coating a substrate for a release material with a release agent or the like is usable.

Examples of the substrate for the release material include a paper substrate, a resin film or sheet, a substrate prepared by laminating a paper substrate with a resin and the like that are usable as the substrate for the antifouling sheet of the present invention.

Examples of the release agent include a silicone resin, an olefin resin, an isoprene resin, a rubber elastomer such as a butadiene resin, a long-chain alkyl resin, an alkyd resin, a fluororesin, etc.

The thickness of the release material is not specifically limited, but is preferably 10 to 200 µm, more preferably 25 to 150 µm.

### [Adhesive Layer]

Examples of the adhesive to constitute the adhesive layer include an acrylic adhesive, an urethane adhesive, a silicone adhesive, a rubber adhesive, a polyester adhesive, a UV-curable adhesive, etc., which may be suitably selected in accordance with the use of the antifouling sheet.

One alone or two or more of these adhesives may be used either singly or as combined.

The thickness of the adhesive layer is not specifically limited, but is preferably 1 to 100 µm, more preferably 5 to 80 µm.

### [Production Method for Antifouling Sheet]

A production method for the antifouling sheet of the present invention preferably includes the following steps (1) to (3).
Step (1): a step of forming an interlayer (X).
Step (2): a step of applying the above-mentioned antifouling layer-forming composition onto the surface of the interlayer (X) formed in the step (1), thereby forming a coating film.
Step (3): a step of drying and curing the coating film formed in the step (2), thereby forming an antifouling layer (Y).

### <Step 1>

The step (1) is a step of forming an interlayer (X), specifically forming an interlayer (X) on a substrate or on the release-treated surface of a release material.

In the step (1), it is preferable that a solvent is added to the interlayer-forming composition containing a (poly)silazane compound and any other optional additive to prepare a solution of the composition, the resultant solution is applied to a substrate or the release-treated surface of a release material to form a coating film, and the coating film is dried to form an interlayer (X).

Examples of the solvent include dibutyl ether, methyl ethyl ketone, methyl isobutyl ketone, ethyl acetate, cyclopentyl methyl ether, propylene glycol monomethyl ether, toluene, xylene, diethyl ether, mineral spirit, etc. One alone or two or more of these solvents may be used either singly or as combined.

Examples of the coating method with a solution of the (poly)silazane compound-containing interlayer-forming composition include a spin coating method, a spray coating method, a bar coating method, a knife coating method, a roll knife coating method, a roll coating method, a blade coating method, a die coating method, a gravure coating method, etc.

### <Step (2)>

In the step (2), the above-mentioned antifouling layer-forming composition is applied to the surface of the interlayer (X) formed in the step (1), thereby forming a coating film.

In the step (2), it is preferable that a solvent is added to the antifouling layer-forming composition to prepare a solution thereof and the resultant solution is applied to the surface of the interlayer (X).

Examples of the solvent include alcohols having 1 to 4 carbon atoms such as methanol, ethanol, n-propanol, isopropyl alcohol, butanol, etc.; ethyl acetate; methyl ethyl ketone; methyl isobutyl ketone; toluene; xylene; etc. One alone or two or more of these solvents may be used either singly or as combined.

The coating method with the solution may be the same as the method to be used in forming the interlayer (X) in the step (1).

### <Step (3)>

In the step (3), the coating film formed in the step (2) is dried and cured to form an antifouling layer (Y).

The drying temperature and the drying time are not specifically limited, and may be set in any desired manner.

The production method for the antifouling sheet of the present invention may also be a method of sticking an interlayer (X) and an antifouling layer (Y) that have been formed separately, thereby producing a laminate, apart from the production methods including the above steps (1) to (3).

Specifically, an interlayer (X) formed on a substrate or a release material, and an antifouling layer (Y) formed by applying an antifouling layer-forming composition to a release material to form a coating film thereon followed by drying the coating film are stuck to give a laminate, thereby producing the antifouling sheet of the present invention.

The interlayer (X) and the antifouling layer (Y) may be stuck at room temperature, or heated interlayer (X) and antifouling layer (Y) may be stuck; however, it is preferable that the production method includes a step of sticking the interlayer (X) and the antifouling layer (Y) at room temperature to prepare a laminate, followed by heating the resultant laminate.

### [Physical Properties of Antifouling Sheet]

The antifouling sheet of the present invention is provided with the antifouling layer (Y) having good surface state and curability, and has a large slip acceleration for water droplets, thereby having excellent water repellency that makes water droplets slip off instantly, and is excellent in interlayer adhesiveness.

When water droplets are dropped on the surface of the antifouling layer (Y) of the antifouling sheet of the present invention, the slip acceleration for water droplets is preferably 180 mm/s² or more, more preferably 190 mm/s² or more, even more preferably 230 mm/s² or more, further more preferably 450 mm/s² or more.

The value of slip acceleration for water droplets means the value calculated according to the method described in the section of Examples.

### Examples

The number-average molecular weight (Mn) of the component used in the following Examples was measured according to the method mentioned below.

### <Number-Average Molecular Weight (Mn)>

Using a gel permeation chromatography apparatus (trade name "HLC-8020", manufactured by Tosoh Corporation), measurement was carried out under the condition mentioned below to give a standard polystyrene-equivalent value of the number-average molecular weight.

### (Measurement Condition)

Column: "TSK guard column HXL-H", "TSK gel GMHXL (× 2)" and "TSK gel G2000HXL" (all manufactured by Tosoh Corporation) connected in series.
Column temperature: 40°C
Developing solvent: tetrahydrofuran
Flow rate: 1.0 mL/min

### Examples 1 to 10, Comparative Examples 1 to 13

### (1) Preparation of antifouling layer-forming composition

The components of the types shown in Table 1 were blended in the blend ratio (effective component ratio) shown therein, and diluted with ethanol to prepare a solution of an antifouling layer-forming composition having an effective component concentration of 1.8 M.

In preparing the antifouling layer-forming composition, the components used in Table 1 are shown below.

### <Component (A)>

"TEOS: tetraethoxysilane, tetrafunctional silane compound of the formula (a) where p = 4 and R¹ = ethyl group.

### <Component (B)>

"Hexyltriethoxysilane": trifunctional silane compound of the formula (b) where q = 3, R² = n-hexyl group (carbon number: 6) and R³ = ethyl group.

"Octyltriethoxysilane": trifunctional silane compound of the formula (b) where q = 3, R² = n-octyl group (carbon number: 8) and R³ = ethyl group.

"Decyltriethoxysilane": trifunctional silane compound of the formula (b) where q = 3, R² = n-decyl group (carbon number: 10) and R³ = ethyl group.

"Dodecyltriethoxysilane": trifunctional silane compound of the formula (b) where q = 3, R² = n-dodecyl group (carbon number: 12) and R³ = ethyl group.

### <Similar components to component (B)>

"Methyltriethoxysilane": trifunctional silane compound of the formula (b) where q = 3, R² = methyl group (carbon number: 1) and R³ = ethyl group.

"Ethyltriethoxysilane": trifunctional silane compound of the formula (b) where q = 3, R² = ethyl group (carbon number: 2) and R³ = ethyl group.

"Propyltriethoxysilane": trifunctional silane compound of the formula (b) where q = 3, R² = n-propyl group (carbon number: 3) and R³ = ethyl group.

"Hexadecyltriethoxysilane": trifunctional silane compound of the formula (b) where q = 3, R² = n-hexadecyl group (carbon number: 16) and R³ = ethyl group.

"Octadecyltriethoxysilane": trifunctional silane compound of the formula (b) where q = 3, R² = n-octadecyl group (carbon number: 18) and R³ = ethyl group.

### <Component (C)>

"Hydrochloric acid": 0.01 M hydrochloric acid.

### (2) Production of antifouling sheet

A polyethylene terephthalate (PET) film with a primer layer provided on one surface thereof (trade name "Cosmoshine A-4100" having a thickness of 50 µm, manufactured by Toyobo Co., Ltd.) was used as a substrate.

"Aquamica NL110A-20" (manufactured by Merck KGaA, interlayer-forming solution containing 20% by mass polysilazane compound "perhydropolysilazane" (polysilazane compound of the general formula (1) where R^{A}, R^{B}, R^{C} = hydrogen atom, having a number-average molecular weight (Mn) of 2000) was applied onto the primer layer of the PET film, using a Mayer bar, to form a coating film thereon. Next, the coating film was dried at 110°C for 2 minutes to form an interlayer (X) containing the (poly)silazane compound and having a thickness of 1.5 µm.

Subsequently, this was left in an environment at 23°C and 50% RH (relative humidity), and then, a solution of the above-mentioned antifouling layer-forming composition was applied onto the interlayer (X), using a Mayer bar, to form a coating film thereon. Next, the coating film was dried at 80°C for 2 minutes to form an antifouling layer (Y) having a thickness of 0.7 µm, thereby producing an antifouling sheet.

### Example 11

An antifouling sheet was produced in the same manner as in Example 1 except that the interlayer (X) as mentioned below was formed.

3 parts by mass (effective component ratio) of a polymerization initiator "Irgacure 184" (manufactured by BASF SE) and 10.3 parts by mass (effective component ratio) of a silazane compound 2,2,4,4,6,6-hexamethylcyclotrisilazane were blended with 100 parts by mass (effective component ratio) of a polymerizing compound dipentaerythritol hexaacrylate (DPHA), and a mixed solvent of methyl isobutyl ketone (MIBK) and propylene glycol monomethyl ether (PGM) (MIBK/PGM = 4/1 by mass) was added thereto to prepare a solution of an interlayer-forming composition having an effective component concentration of 40% by mass.

Using a PET film having a primer layer provided on one surface thereof, which was the same as in Example 1, the solution of the interlayer-forming composition was applied onto the primer layer of the PET film using a Mayer bar to form a coating film thereon. Next, the coating film was dried at 70°C for 1 minute, and irradiated with UV rays on the side of the coating film to cure the coating film in such a manner that the thickness of the cured film could be 1.5 µm, thereby forming a silazane compound-containing interlayer (X).

For UV irradiation, a belt conveyor-type UV irradiation device (trade name, "CV-110Q-G" manufactured by Fusion UV Systems Japan KK) was used, and a high-pressure mercury lamp was used as the UV source. Regarding the irradiation condition, the light wavelength was 365 nm, the illuminance was 896 mW/cm², and the light quantity was 86 mJ/cm² (as measured with a UV actinometer "UVPF-A1" manufactured by Eye Graphics Co., Ltd.).

### Example 12

An antifouling sheet was produced in the same manner as in Example 11, except that 10.3 parts by mass (effective component ratio) of 1,1,1,3,3,3-hexamethyldisilazane was incorporated as the silazane compound to prepare an interlayer-forming composition solution having an effective component concentration of 40% by mass.

### Example 13

An antifouling sheet was produced in the same manner as in Example 11, except that 20.6 parts by mass (effective component ratio) of 1,1,1,3,3,3-hexamethyldisilazane was incorporated as the silazane compound to prepare an interlayer-forming composition solution having an effective component concentration of 45% by mass.

The characteristics of the antifouling layer-forming compositions and the antifouling sheets prepared and produced in the manner as above were evaluated according to the methods mentioned below. The results are shown in Table 1.

### <Surface State of Antifouling Layer (Y)>

In the process of producing the antifouling sheets, the above-mentioned antifouling layer-forming composition solution was applied onto the interlayer (X), and the formed coating film and the antifouling layer (Y) formed by drying the coating film were visually observed, and the surface state of the antifouling layer (Y) was evaluated according to the following criteria.
A: No cissing was seen, and a good coating film was formed. In addition, the surface state of the antifouling layer (Y) formed by drying the coating film was also good.
B: Spot-like cissings having a diameter of 5 mm or less were seen in the formed coating film, but were on an acceptable level. In addition, the surface state of the antifouling layer (Y) formed by drying the coating film was relatively good.
C: Spot-like cissings having a diameter of 5 mm or more were seen in the formed coating film, and therefore the surface state of the antifouling layer (Y) formed by drying the coating film was poor, and the antifouling sheets were useless.
D: The formed coating film gelled partly in some sites, and the surface state of the antifouling layer (Y) formed by drying the coating film was poor, and the antifouling sheets were useless.

The antifouling sheets given the evaluation of "C" or "D" are useless, and are therefore not evaluated in point of the following "slip acceleration" and "adhesiveness".

### <Curability of Antifouling Layer (Y)>

The surface of the antifouling layer (Y) of the antifouling sheet was rubbed 20 times with a finger, and then the antifouling layer (Y) was visually checked. According to the following criteria, the curability of the antifouling layer (Y) was evaluated. Those in which the coating film formed of the antifouling layer-forming composition could not be cured naturally, therefore not forming the antifouling layer (Y) were evaluated as "D".
A: No change was seen as compared with the film not rubbed with a finger.
B: The film whitened slightly, but on an acceptable level.
C: The film whitened.
D: The coating film formed of the antifouling layer-forming composition could not be cured, and the antifouling layer (Y) could not be formed.

The antifouling sheets given the evaluation "C" or "D" are useless, and are therefore not evaluated in point of the following "slip acceleration" and "adhesiveness".

### <Measurement of Slip Acceleration>

The antifouling sheet produced in Examples and Comparative Examples was, while stretched in wet, put on a stage at a tilt angle of 35 degrees in such a manner that the antifouling layer (Y) could be exposed out, and 30 µl of pure water was dropped onto the antifouling layer (Y) of the antifouling sheet, thereby determining the relationship between the pure water slip distance and the slip time.

From the resultant relationship between the slip distance and the slip time, the slip distance per unit time was differentiated, the speed change per unit time was calculated, further the speed change per unit time was differentiated, and the acceleration (slip acceleration) was calculated from the resultant regression line. Table 1 shows a value of the calculated slip acceleration. When the slip acceleration is 180 mm/s² or more, the antifouling performance of the antifouling sheet can be said to be good.

### <Measurement of Interlayer Adhesiveness>

The antifouling sheets produced in Examples and Comparative Examples were evaluated for the interlayer adhesiveness thereof according to a cross-cut adhesion test of JIS K5400. Table 1 shows the number of unpeeled crosscuts per 100 crosscuts tested.

**Table 1**

| | Interlayer (X) | | Antifouling Layer (Y) | | | | | | | | | Evaluation Items | | | |
|---|---|---|---|---|---|---|---|---|---|---|---|---|---|---|---|
| | | | Antifouling Layer-Forming Composition | | | | | | | | Thick ness (µm) | Surface State of Antifouling Layer (Y) | Curability of Antifouling Layer (Y) | Slip Acceleration (mm/s²) | Interlayer Adhesiveness (un peeled crosscuts/100 crosscuts) |
| | | | Component (A) | | Component (B) or Similar Component | | | | Component (C) | | | | | | |
| | (Poly)silazane Compound | Thick ness (µm) | kind | mol % | kind | carbon number of R² in formula (b) | mol % | (A)/(B) [by mol]: | kind | mol% | | | | | |
| Example 1 | perhydropolysilazane | 1.5 | TEOS | 100 | hexyltriethoxysilane | 6 | 12.5 | 8 | hydrochloric acid | 0.059 | 0.7 | A | A | 199 | 100 |
| Example 2 | perhydropolysilazane | 1.5 | TEOS | 100 | hexyltriethoxysilane | 6 | 25.0 | 4 | hydrochloric acid | 0.053 | 0.7 | A | A | 550 | 100 |
| Example 3 | perhydropolysilazane | 1.5 | TEOS | 100 | hexyltriethoxysilane | 6 | 50.0 | 2 | hydrochloric acid | 0.044 | 0.7 | A | B | 949 | 100 |
| Example 4 | perhydropolysilazane | 1.5 | TEOS | 100 | octyltriethoxysilane | 8 | 12.5 | 8 | hydrochloric acid | 0.059 | 0.7 | B | A | 234 | 100 |
| Example 5 | perhydropolysilazane | 1.5 | TEOS | 100 | octyltriethoxysilane | 8 | 25.0 | 4 | hydrochloric acid | 0.053 | 0.7 | A | A | 535 | 100 |
| Example 6 | perhydropolysilazane | 1.5 | TEOS | 100 | octyltriethoxysilane | 8 | 50.0 | 2 | hydrochloric acid | 0.044 | 0.7 | A | B | 1198 | 100 |
| Example 7 | perhydropolysilazane | 1.5 | TEOS | 100 | decyltriethoxysilane | 10 | 12.5 | 8 | hydrochloric acid | 0.059 | 0.7 | A | A | 462 | 100 |
| Examples | perhydropolysilazane | 1.5 | TEOS | 100 | decyltriethoxysilane | 10 | 25.0 | 4 | hydrochloric acid | 0.053 | 0.7 | A | A | 1006 | 100 |
| Example 9 | perhydropolysilazane | 1.5 | TEOS | 100 | decyltriethoxysilane | 10 | 50.0 | 2 | hydrochloric acid | 0.044 | 0.7 | A | B | 1482 | 100 |
| Example 10 | perhydropolysilazane | 1.5 | TEOS | 100 | dodecyltriethoxysilane | 12 | 25.0 | 4 | hydrochloric acid | 0.053 | 0.7 | B | A | 995 | 100 |
| Example 11 | 2,2,4,4,6,6-hexamethylcyclotrisilazane (*1) | 1.5 | TEOS | 100 | decyltriethoxysilane | 10 | 25.0 | 4 | hydrochloric acid | 0.059 | 0.7 | A | A | 1023 | 100 |
| Example 12 | 1,1,1,3,3,3-hexamethyldisilazane(*1) | 1.5 | TEOS | | decyltriethoxysilane | 10 | 25.0 | 4 | hydrochloric acid | 0.059 | 0.7 | A | B | 713 | 100 |
| Example 13 | 1,1,1,3,3,3-hexamethyidisilazane (*2) | 1.5 | TEOS | 100 | decyltriethoxysilane | 10 | 25.0 | 4 | hydrochloric acid | 0.059 | 0.7 | A | A | 884 | 100 |
| Comparative Example 1 | | 0 | TEOS | 100 | decyltriethoxysilane | 10 | 25.0 | 4 | hydrochloric acid | 0.053 | 0.7 | A | D | -(*3) | -(*3) |
| Comparative Example 2 | | 0 | TMOS | 100 | decyltriethoxysilane | 10 | 25.0 | 4 | hydrochloric acid | 0.053 | 0.7 | A | D | -(*3) | -(*3) |
| Comparative Example 3 | perhydropolysilazane | 1.5 | TEOS | 100 | hexyltriethoxysilane | 6 | 6.25 | 16 | hydrochloric acid | 0.063 | 0.7 | C | A | -(*3) | -(*3) |
| Comparative Example 4 | perhydropolysilazane | 1.5 | TEOS | 100 | octyltriethoxysilane | 8 | 6.25 | 16 | hydrochloric acid | 0.063 | 0.7 | B | A | 84 | 100 |
| Comparative Example 5 | perhydropolysilazane | 1.5 | TEOS | 100 | decyltriethoxysilane | 10 | 6.25 | 16 | hydrochloric acid | 0.063 | 0.7 | B | A | 176 | 100 |
| Comparative Example 6 | perhydropolysilazane | 1.5 | TEOS | 100 | hexyltriethoxysilane | 6 | 100 | 1 | hydrochloric acid | 0.033 | 0.7 | A | D | -(*3) | -(*3) |
| Comparative Example 7 | perhydropolysilazane | 1.5 | TEOS | 100 | octyltriethoxysilane | 8 | 100 | 1 | hydrochloric acid | 0.033 | 0.7 | A | D | -(*3) | -(*3) |
| Comparative Example 8 | perhydropolysilazane | 1.5 | TEOS | 100 | decyltriethoxysilane | 10 | 100 | 1 | hydrochloric acid | 0.033 | 0.7 | A | D | -(*3) | -(*3) |
| Comparative Example 9 | perhydropolysilazane | 1.5 | TEOS | 100 | methyltriethoxysilane | 1 | 25.0 | 4 | hydrochloric acid | 0.053 | 0.7 | C | A | -(*3) | -(*3) |
| Comparative Example 10 | perhydropolysilazane | 1.5 | TEOS | 100 | ethyltriethoxysilane | 2 | 25.0 | 4 | hydrochloric acid | 0.053 | 0.7 | C | A | -(*3) | -(*3) |
| Comparative Example 11 | perhydropolysilazane | 1.5 | TEOS | 100 | propyltriethoxysilane | 3 | 25.0 | 4 | hydrochloric acid | 0.053 | 0.7 | C | A | -(*3) | -(*3) |
| Comparative Example 12 | perhydropolysilazane | 1.5 | TEOS | 100 | hexadecyltriethoxysilane | 16 | 25.0 | 4 | hydrochloric acid | 0.053 | 0.7 | A | C | -(*3) | -(*3) |
| Comparative Example 13 | perhydropolysilazane | 1.5 | TEOS | 100 | Octadecyltriethoxysilane | 18 | 25.0 | 4 | hydrochloric acid | 0.053 | 0.7 | D | D | -(*3) | -(*3) |

| | | | | | | | | | | | | | | | |
|---|---|---|---|---|---|---|---|---|---|---|---|---|---|---|---|
| (*1): Effective component ratio (part by mass) in interlayer-forming composition, DPHA/Irgacure 184/(polysilazane compound = 100/3/10.3 (*2): Effective component ratio (part by mass) in interlayer-forming composition, DPHA/Irgacure 184/(polysilazane compound = 100/3/20.6 (*3): Since at least one of "surface state of antifouling layer" and "curability of antifouling layer" was poor, the test was finished without evaluating the "slip acceleration" and the "interlayer adhesiveness' | | | | | | | | | | | | | | | |

As in Table 1, in Examples 1 to 13, the coating property of the antifouling layer-forming composition prepared was good and the antifouling layer (Y) of the produced antifouling sheet had good surface state and curability. In addition, the slip acceleration for water droplets on these antifouling sheets was large, and therefore the antifouling sheets had excellent water repellency capable of slipping off water droplets instantly, and had good interlayer adhesiveness.

On the other hand, the antifouling sheets produced in Comparative Examples 1 to 3 and 6 to 13 were poor in surface state and the curability of the antifouling layer (Y) therein. Accordingly, it was judged that these antifouling sheets were useless, and therefore the antifouling sheets were not evaluated for the slip acceleration and the adhesiveness thereof.

The antifouling sheets produced in Comparative Examples 4 and 5 had a small slip acceleration, and it is considered that these sheets are poor in antifouling performance.

### Industrial Applicability

The antifouling sheet of the present invention is provided with an antifouling layer having good surface state and curability, and has a large slip acceleration for water droplets, thereby having excellent water repellency that makes water droplets slip off instantly. In addition, the antifouling sheet has excellent interlayer adhesiveness.

Accordingly, the antifouling sheet of the present invention is favorable, for example, as an antifouling sheet for preventing water droplets, stains and the like that may hinder vision, from adhering to the surfaces of windows for buildings, windows for automobiles, windshields for cars, airplanes, ships and the like, aquariums, ship bottom windows, undersea lives adhesion preventing films for ship bottoms, road panels such as soundproof walls and the like, mirrors installed in bathrooms and the like, and molded articles such as glass chambers, glass accessories and the like, and is more favorable for applications that require water repellency capable of instantaneously slipping off water droplets, such as for windows for automobiles, windshields for cars, airplanes, ships and the like, etc.

### Reference Signs List

- 1a, 1b, 1c, 2a, 2b, 2c: Antifouling Sheet
- 11: Interlayer (X)
- 12: Antifouling Layer (Y)
- 13: Substrate
- 13a: Primer Layer
- 14: Adhesive Layer
- 15, 15': Release Material

## Claims

1. An antifouling sheet having an interlayer (X) containing a (poly)silazane compound and having an antifouling layer (Y) layered on the surface of the interlayer (X), wherein:
the layer (Y) is formed of an antifouling layer-forming composition comprising a silane compound (A) represented by the following formula (a) and a silane compound (B) represented by the following formula (b),
the content of the component (B) in the antifouling layer-forming composition is 8 to 90 mol% relative to 100 mol% of the component (A):
Formula (a): Si(OR¹)ₚ(X¹)₄₋ₚ
wherein R¹ represents an alkyl group having 1 to 6 carbon atoms, X¹ represents a halogen atom, when the formula has plural R¹'s and X¹'s, the plural R¹'s and X¹'s each may be the same as or different from each other, and p indicates an integer of 1 to 4,
Formula (b): R²Si(OR³)_{q}(X²)_{3-q}
wherein R² represents an unsubstituted or substituted alkyl group having 4 to 14 carbon atoms, R³ represents an alkyl group having 1 to 6 carbon atoms, X² represents a halogen atom, when the formula has plural R³'s and X²'s, the plural R³'s and X²'s each may be the same as or different from each other, and q indicates an integer of 0 to 3.

2. The antifouling sheet according to claim 1, wherein the component (A) in the antifouling layer-forming composition contains a silane compound of the formula (a) where p is 4.

3. The antifouling sheet according to claim 1 or 2, wherein the component (B) in the antifouling layer-forming composition contains a silane compound of the formula (b) where q is 3.

4. The antifouling sheet according to any one of claims 1 to 3, wherein the antifouling layer-forming composition further comprises an acid catalyst (C).

5. The antifouling sheet according to claim 4, wherein the component (C) in the antifouling layer-forming composition contains one or more selected from the group consisting of hydrochloric acid, phosphoric acid, acetic acid, formic acid, sulfuric acid, methanesulfonic acid, hydrobromic acid, p-toluenesulfonic acid and trifluoroacetic acid.

6. The antifouling sheet according to claim 4 or 5, wherein the total content of the component (A), the component (B) and the component (C) in the antifouling layer-forming composition is 50 to 100% by mass relative to the total amount of the antifouling layer-forming composition.

7. The antifouling sheet according to any one of claims 1 to 6, wherein the (poly)silazane compound contained in the interlayer (X) is a compound having a repeating unit represented by the following formula (1): 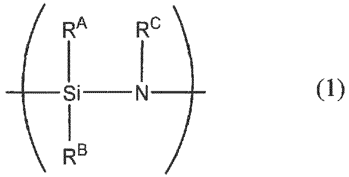 wherein R^{A}, R^{B} and R^{C} each independently represent a hydrogen atom, an alkyl group, a cycloalkyl group, an alkenyl group, an aryl group or an alkylsilyl group, and the alkyl group, the cycloalkyl group, the alkenyl group, the aryl group and the alkylsilyl group may further have a substituent.

8. The antifouling sheet according to any one of claims 1 to 7, which has a configuration where the interlayer (X) is layered on a substrate and the antifouling layer (Y) is further layered on the surface of the interlayer (X).

9. The antifouling sheet according to any one of claims 1 to 8, wherein the thickness of the interlayer (X) is 0.02 to 50 µm.

10. The antifouling sheet according to any one of claims 1 to 9, wherein the antifouling layer (Y) is a layer formed by drying a coating film formed by applying the antifouling layer-forming composition onto the surface of the interlayer (X).

## Patentansprüche

1. Eine fäulnisverhindernde Folie mit einer Zwischenschicht (X), die eine (Poly)silazan-Verbindung enthält und auf der Oberfläche der Zwischenschicht (X) eine fäulnisverhindernde Schicht (Y) aufweist, wobei:
die Schicht (Y) aus einer fäulnisverhindernden schichtbildenden Zusammensetzung, die eine Silan-Verbindung (A) der nachstehenden Formel (a) und eine Silan-Verbindung (B) der nachstehenden Formel (b) umfasst, gebildet wird,
der Gehalt der Komponente (B) in der fäulnisverhindernden schichtbildenden Zusammensetzung 8 bis 90 Mol-% bezogen auf 100 Mol-% der Komponente (A) beträgt:
Formel (a): Si(OR¹)ₚ(X¹)₄₋ₚ
wobei R¹ eine Alkylgruppe mit 1 bis 6 Kohlenstoffatomen darstellt, X¹ ein Halogenatom darstellt, die R¹ und X¹ jeweils gleich oder voneinander verschieden sein können wenn die Formel mehrere R¹ und X¹ aufweist und p eine ganze Zahl von 1 bis 4 anzeigt,
Formel (b): R²Si(OR³)_{q}(X²)_{3-q}
wobei R² eine unsubstituierte oder substituierte Alkylgruppe mit 4 bis 14 Kohlenstoffatomen darstellt, R³ eine Alkylgruppe mit 1 bis 6 Kohlenstoffatomen darstellt, X² ein Halogenatom darstellt, die R³ und X² jeweils gleich oder verschieden sein können wenn die Formel mehrere R³ und X² aufweist und q eine ganze Zahl von 0 bis 3 anzeigt.

2. Die fäulnisverhindernde Folie nach Anspruch 1, wobei die Komponente (A) in der fäulnisverhindernden schichtbildenden Zusammensetzung eine Silan-Verbindung der Formel (a) enthält worin p gleich 4 ist.

3. Die fäulnisverhindernde Folie nach Anspruch 1 oder 2, wobei die Komponente (B) in der fäulnisverhindernden schichtbildenden Zusammensetzung eine Silan-Verbindung der Formel (b) enthält worin q gleich 3 ist.

4. Die fäulnisverhindernde Folie nach einem der Ansprüche 1 bis 3, wobei die fäulnisverhindernde schichtbildende Zusammensetzung des Weiteren einen Säurekatalysator (C) umfasst.

5. Die fäulnisverhindernde Folie nach Anspruch 4, wobei die Komponente (C) in der fäulnisverhindernden schichtbildenden Zusammensetzung eines oder mehrere ausgewählt aus der Gruppe bestehend aus Salzsäure, Phosphorsäure, Essigsäure, Ameisensäure, Schwefelsäure, Methansulfonsäure, Bromwasserstoffsäure, p-Toluolsulfonsäure und Trifluoressigsäure enthält.

6. Die fäulnisverhindernde Folie nach Anspruch 4 oder 5, wobei der Gesamtgehalt der Komponente (A), der Komponente (B) und der Komponente (C) in der fäulnisverhindernden schichtbildenden Zusammensetzung 50 bis 100 Masse-%, bezogen auf die Gesamtmenge der fäulnisverhindernden schichtbildenden Zusammensetzung, beträgt.

7. Die fäulnisverhindernde Folie nach einem der Ansprüche 1 bis 6, wobei die in der Zwischenschicht (X) enthaltene (Poly)silazan-Verbindung, eine Verbindung mit einer Wiederholungseinheit der folgenden Formel (1) ist: 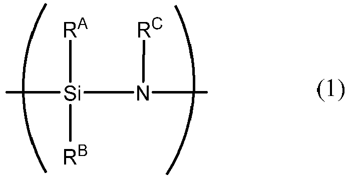 wobei R^{A}, R^{B} und R^{C}, jeweils unabhängig voneinander, ein Wasserstoffatom, eine Alkylgruppe, eine Cycloalkylgruppe, eine Alkenylgruppe, eine Arylgruppe oder eine Alkylsilylgruppe darstellen und die Alkylgruppe, die Cycloalkylgruppe, die Alkenylgruppe, die Arylgruppe und die Alkylsilylgruppe ferner einen Substituenten aufweisen können.

8. Die fäulnisverhindernde Folie nach einem der Ansprüche 1 bis 7, die eine Konfiguration, bei der die Zwischenschicht (X) auf ein Substrat aufgebracht ist und die fäulnisverhindernde Schicht (Y) ferner auf der Oberfläche der Zwischenschicht (X) aufgebracht ist, aufweist.

9. Die fäulnisverhindernde Folie nach einem der Ansprüche 1 bis 8, wobei die Dicke der Zwischenschicht (X) 0,02 bis 50 µm beträgt.

10. Die fäulnisverhindernde Folie nach einem der Ansprüche 1 bis 9, wobei die fäulnisverhindernde Schicht (Y) eine Schicht ist, die durch Trocknen eines Beschichtungsfilms gebildet wird, der durch Aufbringen der fäulnisverhindernden schichtbildenden Zusammensetzung auf die Oberfläche der Zwischenschicht (X) gebildet wird.

## Revendications

1. Feuille antisalissure ayant une couche intermédiaire (X) contenant un composé de (poly)silazane et ayant une couche antisalissure (Y) stratifiée sur la surface de la couche intermédiaire (X), dans laquelle :
la couche (Y) est formée d'une composition de formation de couche antisalissure comprenant un composé de silane (A) représenté par la formule (a) suivante et un composé de silane (B) représenté par la formule (b) suivante,
la teneur du composant (B) dans la composition de formation de couche antisalissure est de 8 à 90% en moles par rapport à 100% en moles du composant (A) :
Formule (a) : Si(OR¹)ₚ(X¹)₄₋ₚ
où R¹ représente un groupe alkyle ayant 1 à 6 atome(s) de carbone, X¹ représente un atome d'halogène, lorsque la formule a plusieurs R¹ et X¹, les plusieurs R¹ et X¹ peuvent être identiques ou différents les uns des autres, et p représente un nombre entier de 1 à 4,
Formule (b) : R²Si(OR³)_{q}(X²)_{3-q}
où R² représente un groupe alkyle non substitué ou substitué ayant 4 à 14 atomes de carbone, R³ représente un groupe alkyle ayant 1 à 6 atome(s) de carbone, X² représente un atome d'halogène, lorsque la formule a plusieurs R³ et X², les plusieurs R³ et X² peuvent être identiques ou différents les uns des autres, et q représente un nombre entier de 0 à 3.

2. Feuille antisalissure selon la revendication 1, dans laquelle le composant (A) dans la composition de formation de couche antisalissure contient un composé de silane de formule (a) où p est égal à 4.

3. Feuille antisalissure selon la revendication 1 ou 2, dans laquelle le composant (B) dans la composition de formation de couche antisalissure contient un composé de silane de formule (b) où q est égal à 3.

4. Feuille antisalissure selon l'une quelconque des revendications 1 à 3, dans laquelle la composition de formation de couche antisalissure comprend en outre un catalyseur acide (C).

5. Feuille antisalissure selon la revendication 4, dans laquelle le composant (C) dans la composition de formation de couche antisalissure contient un ou plusieurs acide(s) choisi(s) dans le groupe constitué par l'acide chlorhydrique, l'acide phosphorique, l'acide acétique, l'acide formique, l'acide sulfurique, l'acide méthanesulfonique, l'acide bromhydrique, l'acide p-toluènesulfonique et l'acide trifluoroacétique.

6. Feuille antisalissure selon la revendication 4 ou 5, dans laquelle la teneur totale du composant (A), du composant (B) et du composant (C) dans la composition de formation de couche antisalissure est de 50 à 100% en masse par rapport à la quantité totale de la composition de formation de couche antisalissure.

7. Feuille antisalissure selon l'une quelconque des revendications 1 à 6, dans laquelle le composé de (poly)silazane contenu dans la couche intermédiaire (X) est un composé ayant une unité de répétition représentée par la formule (1) suivante : 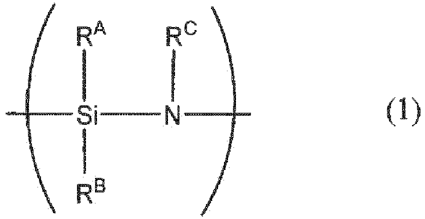 où, R^{A}, R^{B} et R^{C} représentent chacun indépendamment un atome d'hydrogène, un groupe alkyle, un groupe cycloalkyle, un groupe alcényle, un groupe aryle ou un groupe alkylsilyle, et le groupe alkyle, le groupe cycloalkyle, le groupe alcényle, le groupe aryle et le groupe alkylsilyle peuvent en outre avoir un substituant.

8. Feuille antisalissure selon l'une quelconque des revendications 1 à 7, qui a une configuration dans laquelle la couche intermédiaire (X) est stratifiée sur un substrat et la couche antisalissure (Y) est en outre stratifiée sur la surface de la couche intermédiaire (X).

9. Feuille antisalissure selon l'une quelconque des revendications 1 à 8, dans laquelle l'épaisseur de la couche intermédiaire (X) est de 0,02 à 50 µm.

10. Feuille antisalissure selon l'une quelconque des revendications 1 à 9, dans laquelle la couche antisalissure (Y) est une couche formée par séchage d'un film de revêtement formé par application de la composition de formation de couche antisalissure sur la surface de la couche intermédiaire (X).
